# EUROPÄISCHE PATENTANMELDUNG

(11) **EP 1 926 035 A1**
(43) Veröffentlichungstag der Anmeldung: **28.05.2008**
(21) Anmeldenummer: 06019428.9
(22) Anmeldetag: 16.09.2006
(51) Int. Cl.: G06F 21/00

(54) **Verfahren zum Erstellen eines menschenlesbaren Dokumentes sowie maschinenlesbares Dokument**

(71) Anmelder: MediaSec Technologies GmbH, 45127 Essen (DE)
(72) Erfinder: Krüger, Roland, 46325 Borken (DE)
(74) Vertreter: Rösler, Uwe

(57) **Zusammenfassung**

Beschrieben wird ein Verfahren zum Erstellen eines menschenlesbaren Dokumentes, das neben wenigstens einen Datensatz wenigstens eine den Datensatz beschreibende semantische Information, kurz Semantik.

Das lösungsgemäße Verfahren setzt sich aus folgenden Verfahrensschritten zusammen:
- Bereitstellen des Datensatzes sowie der Semantik jeweils in digitaler Form,
- Erzeugen einer menschenlesbaren Darstellung des Dokumentes auf der Grundlage des wenigstens einen Datensatzes und der wenigstens einen Semantik,
- Signieren des Datensatzes und der Semantik und
- Integrieren des signierten Datensatzes und der signierten Semantik in die menschenlesbare Darstellung derart, dass eine Extraktion des signierten Datensatzes sowie der signierten Semantik aus der menschenlesbaren Darstellung möglich ist, und dass auf Grundlage des extrahierten, signierten Datensatzes und der extrahierten signierten Semantik eine idempotente, menschenlesbare Darstellung des Dokumentes erzeugbar ist.

## Beschreibung

### Technisches Gebiet

Die Erfindung bezieht sich auf ein Verfahren zum Erstellen eines menschenlesbaren Dokumentes, das neben wenigstens einen Datensatz wenigstens eine den Datensatz beschreibende semantische Information, kurz Semantik, umfasst.

### Stand der Technik

Der Umgang mit in elektronischer Form vorliegenden Informationen erfordert zum einen eine die Ordnung der vorliegenden Dateninformationen festlegende Datenstruktur, zum anderen eine die Dateninformationen näher erläuternde Beschreibung. Dienen einerseits normierte Datenformate, beispielsweise ASCII, XML, HTML oder TeX etc., zur Festlegung der Datenstruktur, so ermöglichen es semantische Informationen die Bedeutung der einzelnen Dateninformationen näher zu beschreiben. Die Verwendung bspw. von Vorlagen, so genannte Templates, in die an bestimmten, vorhandenen Platzhaltern Dateninformationen hinzugefügt werden können, ermöglichen die semantische Interpretation der einzelnen Dateninformationen.

Ohne die Kenntnis über die semantischen Informationen, kurz Semantik, kann bspw. der folgende Datensatz [200,4000] bedeuten, dass 200 Flaschen ABC-Lösung 4000 EURO kosten, gleichsam könnte es jedoch auch sein, dass der Artikel mit der Artikelnummer 200 noch 4000-fach im Lager vorrätig ist.

Im praktischen Umgang mit in elektronischer Form vorliegenden Daten ist es zumeist schwierig, die semantische Interpretation auf der reinen Datensatzebene leicht nachzuvollziehen, so dass auf der Grundlage des jeweils vorliegenden Datensatzes mit einer den einzelnen Dateninformationen beschreibenden Semantik eine Visualisierung, d.h. eine Umsetzung der in elektronischer Form vorliegenden Informationen in eine menschenlesbare Darstellung notwendig ist. Häufig wird hierzu beispielsweise ein PDF-Dokument erzeugt, dass die visuelle Umsetzung ermöglicht. Erst in einer menschenlesbaren Darstellung bzw. Repräsentation ist es für den menschlichen Betrachter möglich, neben den inhaltlichen Daten die jeweils datensatz-spezifische semantische Interpretation eindeutig zu erfassen.

Durch die globale Vernetzung und die damit verbundene Möglichkeit des weltweiten Datenaustausches gewinnt die Umsetzung von in elektronischer Form vorliegenden Informationen in menschenlesbare Darstellungen, beispielsweise in Form von PDF-Dokumenten, zunehmende Bedeutung. So erhalten in Abhängigkeit nationaler Gesetzgebungen in elektronischer Form vorliegende Dokumente sowie deren Versand über Internet rechtsverbindlichen Charakter sowie rechtliche Akzeptanz bei Ämtern und Behörden. In diesem Zusammenhang sei auf das für die Bundesrepublik Deutschland erlassene Signaturgesetz verwiesen, in dem Rahmenbedingungen vorgegeben werden, die es zu erfüllen gilt, sofern elektronische Dokumente, beispielsweise in Form von Rechnungen, gegenüber Ämtern und Behörden als dokumentenechte Nachweispapiere angesehen werden sollen. Hierbei spielt die Einbettung elektronischer Signaturen in die Dokumente zur Gewährleistung der Rechtssicherheit und Verbindlichkeit für den Austausch elektronischer Datensätze eine zentrale Rolle.

Dabei tritt jedoch das Problem auf, welche Inhalte eines in elektronischer Form vorliegenden Dokumentes signiert werden bzw. signiert werden müssen. Wird beispielsweise ausschließlich der Inhalt des Datensatzes signiert, so wären Manipulationen oder Abänderungen an der Semantik aufgrund fehlender Signatur nicht weiter nachvollziehbar, wodurch die Rechtsverbindlichkeit des gesamten elektronischen Dokumentes nicht gewährleistet sein kann. Wird hingegen der semantische Informationsgehalt mit signiert, so ist zwar einerseits die Verbindlichkeit des Dokumentes gegeben, in der Praxis ist es allerdings für einen Empfänger eines derart signierten Datensatzes schwer, die semantische Interpretation auf Datensatzebene nachzuvollziehen, so dass eine maschinenlesbare Visualisierung des Datensatzes erforderlich ist, die in den meisten Fällen, wie bereits vorstehend erwähnt, durch Erzeugen eines PDF-Dokumentes vorgenommen wird. Fraglich hierbei ist jedoch, ob alle Details des Datensatzes in dem menschenlesbaren PDF-Dokument angezeigt werden und die Bedeutung der tatsächlich angezeigten Daten nicht durch Änderungen oder Überschreibungen verfälscht wird. Um die Problematik zu entschärfen wird häufig das PDF-Dokument nur im Ganzen signiert, d.h. ausschließlich die menschenlesbare Darstellung. Da jedoch das PDF-Dokument über einen sehr komplexen Aufbau verfügt, ist es insbesondere auf Seiten des Signierenden unklar, welche Inhalte signiert oder zusätzlich signiert werden müssen. Beispielsweise kann trotz menschenlesbarer Darstellung im Rahmen eines PDF-Dokumentes für den Menschen nicht sichtbare Informationen enthalten sein, wie beispielsweise weißer Text auf weißem Grund oder Dateninhalte, die außerhalb des sogenannten Betrachtungsbereiches des PDF-Dokumentes liegen.

### Darstellung der Erfindung

Der Erfindung liegt die Aufgabe zugrunde, ein Verfahren zum Erstellen eines menschenlesbaren Dokumentes, das neben wenigstens einem Datensatz wenigstens eine den Datensatz beschreibende semantische Information, kurz Semantik, umfaßt, derart anzugeben, dass zum einen sämtliche Anforderungen an die Rechtsverbindlichkeit von in elektronischer Form vorliegenden Dokumenten erfüllt werden und zum anderen ein transparenter Nachvollzug von signierten Dateninhalten sowohl für den Signierenden als auch für den Empfänger eines in elektronischer Form vorliegenden Dokumentes ermöglich wird.

Ferner gilt es ein entsprechendes maschinenlesbares Dokument bereitzustellen.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der weiteren Beschreibung unter Bezugnahme auf die in den Figuren dargestellten Ausführungsbeispielen zu entnehmen.

Lösungsgemäß setzt sich das Verfahren zum Erstellen eines menschenlesbaren Dokumentes aus den nachfolgenden Verfahrensschritten zusammen. Zunächst gilt es, den Datensatz sowie die den Datensatz beschreibende Semantik jeweils in digitaler Form bereitzustellen. Im Weiteren werden der Datensatz und die Semantik gemeinsam oder getrennt voneinander mit an sich bekannten Signierverfahren signiert. Dem Signaturschritt vor- oder nachgestellt wird auf der Grundlage des wenigstens einen Datensatzes sowie der den Datensatz beschreibenden Semantik eine menschenlesbare Darstellung des Dokumentes erzeugt, die entweder in graphischer Aufbereitung auf einer Monitoreinheit dargestellt wird oder in Form eines Druckerzeugnisses ausgebildet sein kann. Der signierte Datensatz sowie die signierte Semantik wird im Weiteren in die menschenlesbare Darstellung derart integriert, so dass eine Extraktion des signierten Datensatzes sowie der signierten Semantik aus der menschenlesbaren Darstellung möglich ist und dass auf der Grundlage des extrahierten, signierten Datensatzes und der extrahierten signierten Semantik eine idempotente, d.h. weitgehend identische, menschenlesbare Darstellung des ursprünglichen Dokumentes erzeugbar ist. Idempotent bedeutet in diesem Zusammenhang, dass die Möglichkeit besteht, aus einem verfahrensgemäß erstellten Dokument durch Überprüfung der Signatur(en) des Datensatzes und der Semantik und verfahrensgemäßer Visualisierung des Datensatzes in menschenlesbarer Darstellung wieder ein Dokument zu erstellen, welches mit dem ursprünglichen Dokument in einem relevanten Sinn identisch ist. Diese Identität weist nach, dass die vorliegende menschenlesbare Darstellung eine valide Darstellung der zu Grunde liegenden und vom Dokumentenersteller elektronisch signierten Daten ist.

Das mit Hilfe des lösungsgemäßen Verfahrens herstellbare menschenlesbare Dokument enthält somit aus dem Dokument extrahierbare Objekte, auf deren Basis sich das Dokument selbst erzeugen läßt, daher auch die Eigenschaft eines idempotenten Dokumentes. Zudem lassen sich die aus dem Dokument extrahierbaren signierten Objekte, d.h. der signierte Datensatz sowie die signierte Semantik mittels ebenfalls herkömmlicher Programmwerkzeuge verifizieren, so dass das Dokument sowohl für den Signierenden als auch für einen Empfänger des Dokumentes die für viele Anwendungsfälle erforderliche Rechtsverbindlichkeit erhält.

Grundsätzlich spielt es keine Rolle, in welchem Sprachenstandard der Datensatz vorliegt, übliche Sprachenstandards stellen HTML, ASCII, XML oder TeX dar.

Häufig liegen die Daten eines Datensatzes im ASCII-Format vor, zu deren semantischen Beschreibung die Daten in ein Template, das ebenfalls im ASCII-Format vorliegt, eingetragen werden. Der ASCI I-Datensatz sowie das ASCII-Template können mit konventionellen Darstellungsprogrammen in eine menschenlesbare Darstellung überführt werden, wie beispielsweise in eine Word- oder PDF-Datei, die am Bildschirm visuell darstellbar bzw. mit Hilfe eines Druckers in analoger Form ausgedruckt werden kann. Während oder nach der Erzeugung der menschenlesbaren Darstellung des Dokumentes werden lösungsgemäß jeweils der ASCII-Datensatz sowie das ASCII-Template in signierter Form in die menschenlesbare Darstellung integriert, entweder in einer für den Menschen sichtbaren Weise, beispielsweise in Form eines Barcodes, oder in einer für den Menschen unsichtbaren Weise, beispielsweise in Form eines nicht sichtbaren Wasserzeichens. Unabhängig von der jeweils gewählten Integrationsform enthält somit die menschenlesbare Darstellung des Dokumentes zusätzlich signierte inhaltliche Daten sowie deren zugehörige signierte Interpretationsbeschreibung, die beide unabhängig voneinander verifizierbar sind. Gibt es beispielsweise Zweifel an der Authentizität der Darstellung der Inhalte oder der Semantik, so können auf die Inhaltsdaten sowie die Semantikbeschreibung durch die vorstehend beschriebene Extraktion zurückgegriffen werden. Auch läßt sich zudem der Generierungsprozess der menschenlesbaren Darstellung des Dokumentes aus den signierten Inhaltsdaten sowie der signierten Semantik vollständig nachvollziehen.

Unabhängig vom vorstehend beschriebenen Verfahren wird gleichfalls ein menschenlesbares Dokument mit wenigstens einem Datensatz und einer den Datensatz beschreibenden semantischen Information, kurz Semantik, beschrieben, in dem in lösungsgemäßer Weise der wenigstens eine Datensatz und die Semantik jeweils in signierter Form derart integriert sind, dass der signierte Datensatz und die Semantik aus dem Dokument extrahierbar sind. Auf der Grundlage des extrahierten signierten Datensatzes und der extrahierten signierten Semantik ist eine idempotente, menschen lesbare Darstellung des Dokumentes wieder erzeugbar. So ist es möglich, mit Hilfe der idempotenten, menschenlesbaren Darstellung des Dokumentes eine Verifikation desselben hinsichtlich Originalität bzw. Authentizität des Dokumentes durchzuführen. Weitere Einzelheiten hierzu können der weiteren Beschreibung unter Bezugnahme auf die nachstehenden Ausführungsbeispiele entnommen werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Prozessfolgeschema zur Erstellung eines signierten Datensatzes,
- Fig. 2: Darstellung eines signierten Datensatzes sowie der signierten Semantik im Rahmen eines 2D-Matrixcodes sowie
- Fig. 3: Illustration der Verfahrensschritte zur Erstellung einer idempotenten, menschenlesbaren Darstellung des Dokumentes.

### Wege zur Ausführung der Erfindung, gewerbliche Verwendbarkeit

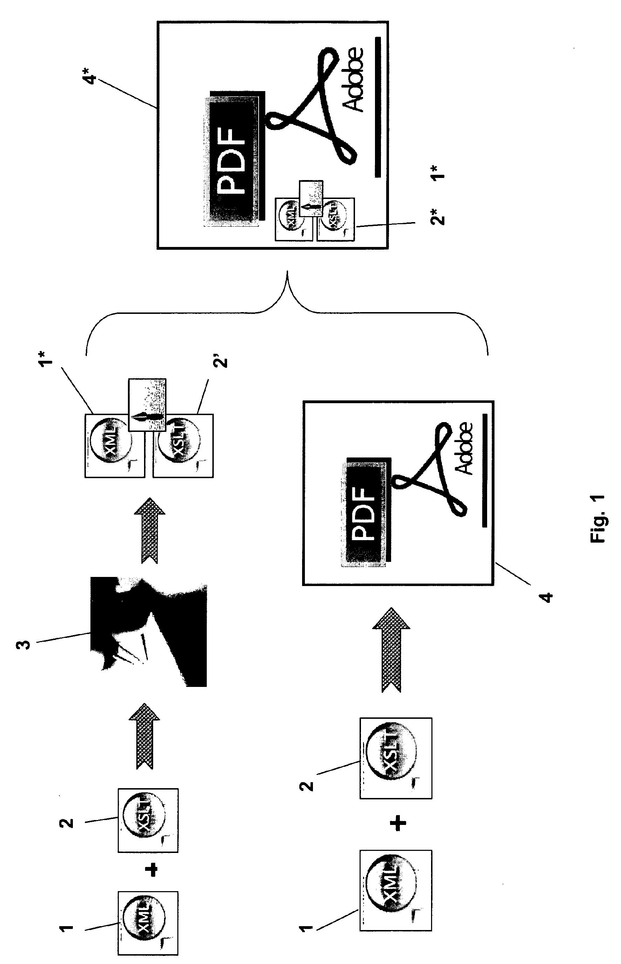

In Figur 1 obere Prozessfolge ist ein Prozessfolgeschema zur Erstellung eines signierten Datensatzes 1 * sowie einer signierten Semantik 2* dargestellt. Es sei angenommen, dass als Sprachenstandard zur Repräsentation des Datensatzes 1 XML gewählt ist, der als weit verbreiteter Standard zur Erstellung maschinen- und menschenlesbarer Dokumente angesehen werden kann. Zur semantischen Beschreibung der Dateninhalte dient eine so genannte XSL-Transformation 2, durch die die im XML vorliegenden Daten 1 mit Hilfe eines so genannten XSLT-Style Sheet 2 transformiert werden, in dem die XML-Daten 1 einer diese beschreibenden Semantik zugeführt werden.

Der die Daten repräsentierende XML-Standard 1 sowie die Semantik darstellende XSLT-Transformation 2 werden getrennt voneinander oder gemeinsam miteinander mit Hilfe einer an sich bekannten Signaturtechnik, beispielsweise mittels XML-DSIG, in dem in Figur 1 mit dem Bezugszeichen 3 dargestellten Verfahrensschritt signiert. Als Ergebnis erhält man einen signierten Datensatz 1* sowie die signierte Semantik 2*.

Getrennt von der vorstehend beschriebenen Signatur wird eine maschinenlesbare Darstellung 4 des Dokumentes als PDF-Dokument erstellt und dies auf Basis des in XML vorliegenden Datensatzes 1 sowie der die Semantik repräsentierenden XSL-Transformation 2 (siehe untere Prozessfolge in Figur 1).

Die in Figur 1 dargestellte geschweifte Klammer repräsentiert den Integrationsschritt, bei dem der signierte Datensatz 1* sowie die signierte Semantik 2* in die menschenlesbare Darstellung 4 des Dokumentes eingebettet werden. Die auf diese Weise durch den signierten Datensatz 1 * sowie die signierte Semantik 2* ergänzte menschenlesbare Darstellung 4* stellt ein lösungsgemäß ausgebildetes Dokument dar, das durch idempotente Nachbildung die Möglichkeit der Verifikation des Dokumentes schafft.

Mit Hilfe geeigneter Lese- bzw. Extraktionstechniken können der signierte Datensatz 1 * sowie die signierte Semantik 2* aus der lösungsgemäß erweiterten menschenlesbaren Darstellung 4* des Dokumentes extrahiert werden und auf deren Grundlage ein weiteres, zur ursprünglich menschenlesbaren Darstellung 4 des Dokumentes idempotentes, d.h. weitgehend identisches, Dokument erzeugt werden, das im Wege an sich bekannter Verifikationstechniken überprüft werden kann.

Die Integration des signierten Datensatzes 1* sowie der signierten Semantik 2* in die Darstellung 4* kann entweder unter Verwendung eines für den Menschen ersichtlichen Barcodes, bspw. ein zweidimensionaler Matrixcode, erfolgen oder aber auch in unsichtbarer Weise, beispielsweise unter Verwendung an sich bekannter Wasserzeichentechnik. In beiden Fällen sind Extraktionstechniken bekannt, mit denen die entsprechenden signierten Dokumenteninhalte für die nachfolgende Verifikation aus dem ergänzten Dokument 4* extrahierbar sind.

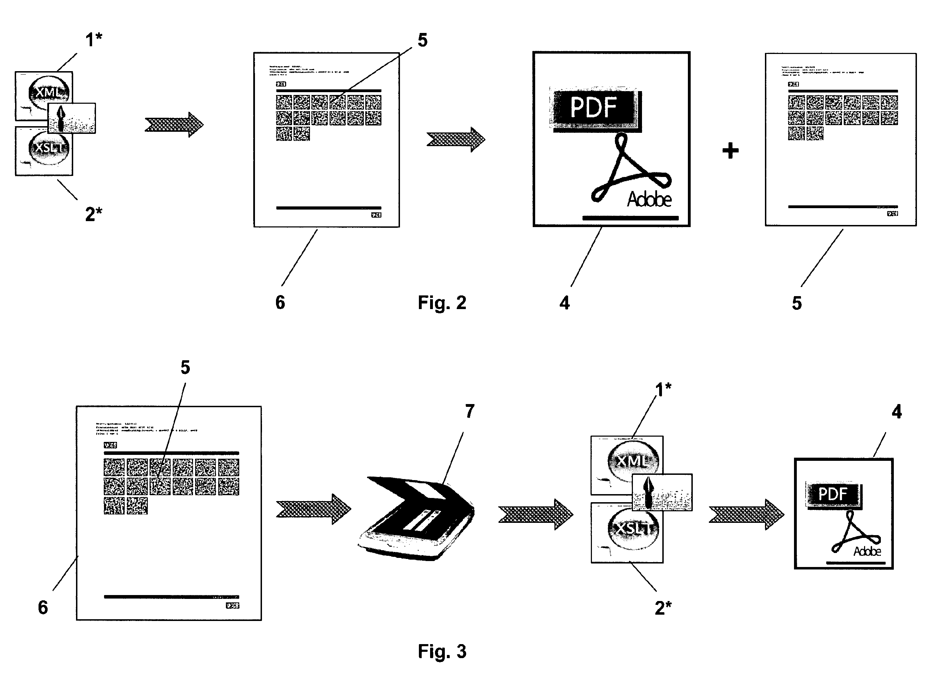

In Figur 2 ist die Möglichkeit der Darstellung des signierten Datensatzes 1* sowie der signierten Semantik 2* im Rahmen eines 2D-Matrixcodes 5 gezeigt, der als separates Zusatzblatt 6 zu der eigentlichen, maschinenlesbaren Darstellung 4 des Dokumentes, bspw. gleichfalls im PDF-Format, ausgedruckt oder auf einem Monitor dargestellt wird. Üblicherweise sind sowohl die menschenlesbare Darstellung 4 sowie der 2D-Matrixcode 5 in einer gemeinsamen PDF-Datei abgespeichert.

In Figur 3 sind die Schritte zur idempotenten Nachbildung des Dokumentes 4 ersichtlich, wobei von einem 2D-Matrixcode 5 ausgegangen wird, der auf dem Extrablatt 6 in menschenlesbarer analoger Form vorliegt. Das Extrablatt 6 wird mittels eines geeigneten Barcode-Lesegerätes 7 gelesen, das sowohl den signierten Datensatz 1* sowie die signierte Semantik 2* aus dem Extrablatt 6 in elektronischer Form zu extrahieren vermag, auf deren Grundlage letztlich eine idempotente inhaltsgleiche Nachbildung des menschenlesbaren Dokumentes 4 erstellt wird, die einer Verifikation unterzogen werden kann.

Mit Hilfe des lösungsgemäßen Verfahrens sowie der damit herstellbaren menschenlesbaren Darstellung eines Dokumentes ist es möglich, eine authorisierte Verteilung von Dokumenten, beispielsweise in Form von PDF-Dateien, in nachprüfbarer Weise durchzuführen, indem die Authentizität des jeweils verteilten Dokumentes verifiziert wird. Ferner ist es möglich, den Vertraulichkeitsstatus menschenlesbarer Darstellungen auf einfache Weise zu überprüfen. Zudem gestattet das lösungsgemäße Verfahren eine automatisierte Markierung menschen lesbarer Darstellungen von Dokumenten als vertraulich, indem die Semantik, beispielsweise in Form einer XSL-Transformation in geeigneter Weise markiert wird. Auch können weitere Informationen in die menschenlesbare Darstellung des Dokumentes hinzugefügt werden, wie beispielsweise Name des Autors oder Adresse des Verteilers.

### Bezugszeichenliste

- 1: Datensatz im XML-Standard
- 1 *: signierter Datensatz
- 2: semantische Beschreibung, Semantik in XSL-Transformation
- 2*: Signierte Semantik
- 3: Signaturschritt
- 4: menschenlesbare Darstellung eines Dokumentes
- 4*: lösungsgemäße Darstellung eines Dokumentes
- 5: zweidimensionaler Matrixcode
- 6: Extrablatt
- 7: Barcode-Lesegerät

## Patentansprüche

1. Verfahren zum Erstellen eines menschenlesbaren Dokumentes, das neben wenigstens einen Datensatz wenigstens eine den Datensatz beschreibende semantische Information, kurz Semantik, umfasst, **gekennzeichnet durch** folgende Verfahrensschritte:
- Bereitstellen des Datensatzes sowie der Semantik jeweils in digitaler Form,
- Erzeugen einer menschenlesbaren Darstellung des Dokumentes auf der Grundlage des wenigstens einen Datensatzes und der wenigstens einen Semantik,
- Signieren des Datensatzes und der Semantik und
- Integrieren des signierten Datensatzes und der signierten Semantik in die menschenlesbare Darstellung derart, dass eine Extraktion des signierten Datensatzes sowie der signierten Semantik aus der menschenlesbaren Darstellung möglich ist, und dass auf Grundlage des extrahierten, signierten Datensatzes und der extrahierten signierten Semantik eine idempotente, menschenlesbare Darstellung des Dokumentes erzeugbar ist.

2. Verfahren nach Anspruch 1,
**dadurch gekennzeichnet, dass** der Datensatz mit einem der nachfolgenden Sprachenstandards dargestellt wird: HTML, ASCII, XML, TeX.

3. Verfahren nach Anspruch 1 oder 2,
**dadurch gekennzeichnet, dass** die Semantik in Form eines Templates dargestellt wird, in das der Datensatz eingetragen wird.

4. Verfahren nach Anspruch 3,
**dadurch gekennzeichnet, dass** das Template ein XSLT-Stylesheet ist, in das der in Form einer XML-Datei vorliegende Datensatz mittels einer XSL-Transformation umgewandelt wird.

5. Verfahren nach einem der Ansprüche 1 bis 4,
**dadurch gekennzeichnet, dass** als maschinelesbare Darstellung eine PDF-Darstellung gewählt wird.

6. Verfahren nach einem der Ansprüche 1 bis 5,
**dadurch gekennzeichnet, dass** zum Erzeugen der menschenlesbaren Darstellung des Dokumentes ein FOP-Programm, d.h. Form-Processor, eingesetzt wird.

7. Verfahren nach einem der Ansprüche 1 bis 6,
**dadurch gekennzeichnet, dass** zum Signieren eines in XML vorliegenden Datensatzes ein Signaturstandard, XML-DSIG, angewendet wird.

8. Verfahren nach einem der Ansprüche 1 bis 7,
**dadurch gekennzeichnet, dass** der extrahierte signierte Datensatz und die extrahierte signierte Semantik einer Verifikation unterzogen werden.

9. Verfahren nach einem der Ansprüche 1 bis 8,
**dadurch gekennzeichnet, dass** die idempotente, menschenlesbare Darstellung des Dokumentes einer Verifikation unterzogen wird.

10. Verfahren nach einem der Ansprüche 1 bis 9,
**dadurch gekennzeichnet, dass** der signierte Datensatz und die signierte Semantik in verschlüsselter Form in die menschenlesbare Darstellung integriert werden.

11. Verfahren nach Anspruch 10,
**dadurch gekennzeichnet, dass** als verschlüsselte Form ein ein- oder zweidimensionaler Barcode oder ein Wasserzeichen verwendet wird.

12. Menschenlesbares Dokument mit wenigstens einem Datensatz und einer den Datensatz beschreibenden semantischen Information, kurz Semantik,
**dadurch gekennzeichnet, dass** in dem Dokument der wenigstens eine Datensatz und die Semantik jeweils in signierter Form derart integriert sind, dass der signierte Datensatz und die Semantik aus dem Dokument extrahierbar sind und dass auf Grundlage des extrahierten, signierten Datensatzes und der extrahierten signierten Semantik eine idempotente, menschenlesbare Darstellung des Dokumentes erzeugbar ist.

13. Menschenlesbares Dokument nach Anspruch 12,
**dadurch gekennzeichnet, dass** der signierte Datensatz und die signierte Semantik in für den Menschen nicht wahrnehmbarer Form in die menschenlesbare Darstellung des Dokumentes integriert sind.

14. Menschenlesbares Dokument nach Anspruch 12,
**dadurch gekennzeichnet, dass** die für den Menschen nicht wahrnehmbare Form ein Wasserzeichen ist.

15. Menschenlesbares Dokument nach Anspruch 12,
**dadurch gekennzeichnet, dass** der signierte Datensatz und die signierte Semantik in Form eines Barcodes in die menschenlesbare Darstellung des Dokumentes integriert sind.
